(19) Europäisches Patentamt
European Patent Office
Office européen des brevets

(11) **EP 2 879 800 B1**

(12) **FASCICULE DE BREVET EUROPEEN**

(45) Date de publication et mention
de la délivrance du brevet:
**25.05.2016 Bulletin 2016/21**

(51) Int Cl.:
***B02C 17/20*** *(2006.01)*    ***C04B 35/119*** *(2006.01)*
***C04B 35/185*** *(2006.01)*    ***C04B 35/626*** *(2006.01)*

(21) Numéro de dépôt: **13773403.4**

(22) Date de dépôt: **29.07.2013**

(86) Numéro de dépôt international:
**PCT/IB2013/056225**

(87) Numéro de publication internationale:
**WO 2014/020522 (06.02.2014 Gazette 2014/06)**

(54) **PARTICULE FRITTEE A BASE D'ALUMINE**

PARTIKEL AUS GESINTERTEM ALUMINIUMOXID

SINTERED ALUMINA PARTICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.08.2012 FR 1257504**

(43) Date de publication de la demande:
**10.06.2015 Bulletin 2015/24**

(73) Titulaire: **Saint-Gobain Centre de Recherches et
d'Etudes
Européen
92400 Courbevoie (FR)**

(72) Inventeurs:
• **NONNET, Emmanuel
F-84550 St. Saturnin les Avignon (FR)**
• **LIU, Bing
Shanghai (CN)**

(74) Mandataire: **Nony
3, rue de Penthièvre
75008 Paris (FR)**

(56) Documents cités:
**WO-A1-2005/075375**

**Description**

## Domaine technique

La présente invention se rapporte à de nouvelles particules frittées à base d'alumine, notamment sous forme de billes, à un procédé de fabrication de ces billes, et à l'utilisation de ces particules en tant qu'agents de broyage, agents de dispersion en milieu humide ou pour le traitement de surfaces.

## Etat de la technique

L'industrie minérale ou minière met en oeuvre des particules pour le broyage fin de matières éventuellement prébroyées à sec par des procédés traditionnels, notamment pour le broyage fin de carbonate de calcium, d'oxyde de titane, de gypse, de kaolin et de minerai contenant des métaux sous forme généralement combinées (oxydes, sulfures, silicates...), procédés qui peuvent également faire intervenir au préalable des méthodes de purification, par exemple par flottation.

Les industries des peintures, encres, colorants, laques magnétiques, composés agrochimiques utilisent par ailleurs des particules pour la dispersion et l'homogénéisation de constituants liquides et solides.

L'industrie du traitement de surfaces a enfin recours à des particules, notamment pour des opérations de nettoyage de moules métalliques (pour la fabrication de bouteilles par exemple), l'ébavurage de pièces, le décalaminage, la préparation d'un support en vue d'un revêtement, le traitement de pré-contraintes (« shot peening ») ou le conformage de pièces (« peen forming ») ...

Toutes ces particules sont classiquement sensiblement sphériques et d'une taille de 0,005 à 10 mm afin de servir l'ensemble des marchés décrits ci-dessus. Pour qu'elles puissent être utilisées dans ces trois types d'applications, elles doivent notamment présenter une bonne résistance à l'usure.

Notamment dans le domaine du microbroyage, on trouve sur le marché les différents types de particules suivants, en particulier sous la forme de billes :

- Le sable à grains arrondis, comme le sable d'OTTAWA par exemple, est un produit naturel et bon marché, mais inadapté aux broyeurs modernes, pressurisés et à fort débit. En effet, le sable est peu résistant, de faible densité, variable en qualité et abrasif pour le matériel.

- Les billes de verre, largement utilisées, présentent une meilleure résistance, une plus faible abrasivité et une disponibilité dans une gamme de diamètres plus large.

- Les billes métalliques, notamment en acier, présentent une faible inertie vis-à-vis des produits traités, entraînant notamment une pollution des charges minérales, un grisaillement des peintures, une perturbation des étapes de séparation/purification par flottation, et une densité trop élevée nécessitant des broyeurs spéciaux. Elles impliquent notamment une forte consommation d'énergie, un échauffement important et une sollicitation mécanique élevée du matériel.

On connaît également des billes en matière céramique. Ces billes ont une meilleure résistance que les billes de verre, une densité plus élevée et une excellente inertie chimique.

On peut distinguer :

- les billes céramiques fondues, généralement obtenues par fusion de composants céramiques, formation de gouttes sphériques à partir de la matière en fusion, puis solidification desdites gouttes, et
- les billes céramiques frittées, généralement obtenues par un façonnage à froid d'une poudre céramique, puis une consolidation par cuisson à haute température.

A la différence des particules frittées, les particules fondues comportent le plus souvent une phase vitreuse intergranulaire très abondante qui vient remplir un réseau de grains cristallisés. Les problèmes rencontrés dans leurs applications respectives par les particules frittées et par les particules fondues, et les solutions techniques adoptées pour les résoudre, sont donc généralement différents. Par ailleurs, du fait des différences importantes entre les procédés de fabrication, une composition mise au point pour fabriquer une particule fondue n'est pas a *priori* utilisable telle quelle pour fabriquer une particule frittée, et réciproquement.

WO2005/075375 divulgue des billes de broyage comportant de la mullite, de la zircone stabilisée et de l'alumine, fabriquées à partir d'un mélange de matières premières pouvant comporter du zircon.

Afin d'augmenter le rendement des opérations de broyage, c'est-à-dire la quantité de broyat pour un coût déterminé, les particules de broyage doivent être de plus en plus résistantes à l'usure.

Un but de l'invention est de répondre, au moins partiellement, à ce besoin.

## Résumé de l'invention

L'invention concerne une particule frittée, de préférence sous forme d'une bille, élaborée à partir d'une charge de départ contenant 4 % à 25 % de zircon, en pourcentage massique sur la base de la masse de la charge de départ sèche, ladite particule frittée présentant :

- la composition chimique suivante, en pourcentages en masse :

  $70 \% \leq Al_2O_3$, $Al_2O_3$ constituant le complément à 100 % ;
  $3 \% \leq ZrO_2+HfO_2 \leq 18 \%$, avec $HfO_2 \leq 1 \%$ ;
  $1 \% \leq SiO_2 \leq 10 \%$;
  $0,3 \% \leq CaO \leq 2 \%$, avec $CaO \geq 0,6 \%$ si $Al_2O_3 \leq 79 \%$ ;
  moins de 5 % d'autres constituants, et

- les phases cristallisées suivantes, en pourcentages en masse sur la base de la quantité totale de phases cristallisées :

  $65 \% \leq$ corindon; le corindon constituant le complément à 100 % ;
  $3 \% \leq$ zircone + hafnie, éventuellement stabilisés $\leq 21 \%$ ;
  mullite $\leq 16 \%$ ;
  moins de 5 % d'autres phases cristallisées, et

- une porosité totale inférieure ou égale à 5 %.

Comme on le verra plus en détail dans la suite de la description, les inventeurs ont découvert, de façon inattendue, que cette combinaison de caractéristiques améliore les propriétés de résistance à l'usure.

Les particules selon l'invention, notamment les billes, sont ainsi particulièrement bien adaptées à des applications de dispersion en milieu humide, de microbroyage et de traitement de surfaces.

Une particule frittée selon l'invention peut encore présenter une ou plusieurs des caractéristiques optionnelles suivantes, suivant toutes les combinaisons possibles :

- la teneur en CaO est supérieure à $(4,55 - 0,05.Al_2O_3(\%)) \%$ si $79 \% < Al_2O_3 \leq 85 \%$ (autrement dit, la teneur en CaO est supérieure à 4,55 % moins 0,05 fois la teneur massique en $Al_2O_3$, en pourcentage si ladite teneur massique en $Al_2O_3$ est supérieure à 79 % et inférieure ou égale à 85 %) ;
- la particule frittée comporte plus de 0,1 % de $Y_2O_3$ ; De préférence, la teneur en $Y_2O_3$ est supérieure à 0,5 %, voire supérieure à 0,9 %, et/ou inférieure à 3,0 %, de préférence inférieure à 2,0 %, voire inférieure à 1,5 %, en pourcentages en masse ;
- la particule frittée comporte plus de 0,1 % de $CeO_2$ ; De préférence, la teneur en $CeO_2$ est supérieure à 0,7 %, de préférence supérieure à 1,5 %, et/ou inférieure à 3,0 %, voire inférieure à 2,5 %, en pourcentages en masse ;
- la teneur en « autres constituants » autres que $Y_2O_3$ et $CeO_2$ est inférieure à 3,0 %, de préférence inférieure à 2,5 %, de préférence inférieure à 2,0 %, voire inférieure à 1,5 %, en pourcentages en masse ;
- les « autres constituants » autres que $Y_2O_3$ et $CeO_2$ sont des impuretés ;
- les oxydes d'une particule frittée selon l'invention représentent plus de 95%, de préférence plus de 97%, de préférence plus de 99 %, voire plus de 99,5 %, voire sensiblement 100 % de la masse totale de ladite particule frittée, le complément à 100% étant de préférence constitué d'impuretés ;
- au moins une partie, voire la totalité de la mullite est créée lors du frittage, c'est-à-dire n'était pas présente dans la charge de départ ;
- la teneur en « autres phases cristallisées », en pourcentage en masse sur la base de la quantité totale de phases cristallisées, est inférieure à 4 %, voire inférieure à 3 %, voire inférieure à 2 % ;
- de préférence, les « autres phases cristallisées » sont, pour plus de 90%, plus de 95%, voire sensiblement 100% en masse, le zircon $ZrSiO_4$ et/ou l'anorthite et/ou le quartz et/ou la cristobalite et/ou la tridymite ;
- la quantité massique de phase amorphe, c'est-à-dire vitreuse, en pourcentage en masse par rapport à la masse de la particule, est inférieure à 20 %, inférieure à 15 %, inférieure à 10 %, voire inférieure à 7 %, voire inférieure à 5 % ;
- la porosité totale est inférieure à 4,5 %, voire inférieure à 4 %, voire inférieure à 3 %, voire inférieure à 2 % ;
- la particule frittée présente une taille inférieure à 10 mm et/ou supérieure à 0,005 mm ;
- la particule frittée est une bille ;

- la particule frittée présente une sphéricité supérieure à 0,7, de préférence supérieure à 0,8, de préférence supérieure à 0,85, voire supérieure à 0,9 ;
- la densité de la particule frittée est supérieure à 3,60 g/cm$^3$, voire supérieure à 3,70 g/cm$^3$, voire supérieure à 3,80 g/cm$^3$, voire supérieure à 3,85 g/cm$^3$, voire supérieure à 3,90 g/cm$^3$ et/ou inférieure à 4,20 g/cm$^3$, voire inférieure à 4,10 g/cm$^3$.

Les caractéristiques optionnelles ci-dessus peuvent être, le cas échéant, appliquées aux premier et deuxième modes de réalisation particuliers décrits ci-dessous.

**Dans un premier mode de réalisation particulier,** la charge de départ contient 15 % à 25 % de zircon, en pourcentage massique sur la base de la masse de la charge de départ sèche, et la particule frittée présente :

- la composition chimique suivante, en pourcentages en masse:

   70 % $\leq$ Al$_2$O$_3$, Al$_2$O$_3$ constituant le complément à 100 % ;
   13 % $\leq$ ZrO$_2$+HfO$_2$ $\leq$ 18 %, avec HfO$_2$ $\leq$ 1 % ;
   5 % < SiO$_2$ $\leq$ 9 % ;
   0,6 % $\leq$ CaO $\leq$ 2 % ;

   moins de 5 % d'autres constituants, et
- les phases cristallisées suivantes, en pourcentages en masse sur la base de la quantité totale de phases cristallisées :

   65 % $\leq$ corindon; le corindon constituant le complément à 100 % ;
   10 % $\leq$ zircone + hafnie, éventuellement stabilisés : $\leq$ 21 % ;
   4 % $\leq$ mullite $\leq$ 16 % ;

   moins de 5 % d'autres phases cristallisées, et
- une porosité totale inférieure ou égale à 5 %.

De préférence, dans ce premier mode de réalisation particulier, une particule frittée selon l'invention comporte encore une, et de préférence plusieurs, des caractéristiques optionnelles suivantes :

- la charge de départ contient 20 % à 25 % de zircon, en pourcentage massique sur la base de la masse de la charge de départ sèche ;
- la teneur en Al$_2$O$_3$ est supérieure à 72 % et/ou inférieure ou égale à 79%, inférieure à 78 %, de préférence inférieure à 76 %, de préférence inférieure à 75 %, en pourcentages en masse ;
- la teneur en ZrO$_2$+HfO$_2$ est supérieure à 15 % et/ou inférieure à 17 %, en pourcentages en masse ;
- la teneur en SiO$_2$ est supérieure à 6 %, de préférence supérieure ou égale à 7 % et/ou inférieure à 8,5 %, en pourcentages en masse ;
- la teneur en CaO est supérieure à 0,7 % et/ou inférieure à 1,8 %, de préférence inférieure à 1,5 %, de préférence inférieure à 1,3 %, de préférence inférieure à 1,1 %, en pourcentages en masse ;
- la teneur en corindon (phase Al$_2$O$_3$), en pourcentage en masse sur la base de la quantité totale de phases cristallisées est supérieure à 68 %, de préférence supérieure à 70 % et/ou inférieure ou égale à 84%, inférieure à 82 %, de préférence inférieure à 80 %, de préférence inférieure à 78 % ;
- la teneur en zircone (phase ZrO$_2$) + hafnie (phase HfO$_2$), éventuellement stabilisés, en pourcentage en masse sur la base de la quantité totale de phases cristallisées, est supérieure à 11 %, voire supérieure à 12 % et/ou inférieure à 19 %, voire inférieure à 17 % ;
- la teneur en mullite, en pourcentage en masse sur la base de la quantité totale de phases cristallisées, est supérieure à 5 %, de préférence supérieure à 7 %, de préférence supérieure à 8 %, et/ou inférieure à 14 %, de préférence inférieure à 12 %, de préférence inférieure à 11 %.

**Dans un deuxième mode de réalisation particulier,** la charge de départ contient 4 % à 15 % de zircon, en pourcentage massique sur la base de la masse de la charge de départ sèche, et la particule frittée présente :

- la composition chimique suivante, en pourcentages en masse:

   85 % $\leq$ Al$_2$O$_3$, Al$_2$O$_3$ constituant le complément à 100 % ;
   3 % $\leq$ ZrO$_2$+HfO$_2$ $\leq$ 13 %, avec HfO$_2$ $\leq$ 1 % ;
   1 % $\leq$ SiO$_2$ $\leq$ 6 % ;

0,3 % $\leq$ CaO $\leq$ 2 %,

moins de 5 % d'autres constituants, et
- les phases cristallisées suivantes, en pourcentages en masse sur la base de la quantité totale de phases cristallisées :

86 % $\leq$ corindon; le corindon constituant le complément à 100 % ;
3 % $\leq$ zircone + hafnie, éventuellement stabilisés : $\leq$ 14 % ;
mullite $\leq$ 6 % ;
moins de 5 % d'autres phases cristallisées, et

- une porosité totale inférieure ou égale à 5 %.

De préférence, dans ce deuxième mode de réalisation, une particule frittée selon l'invention comporte encore une, et de préférence plusieurs, des caractéristiques optionnelles suivantes :

- la charge de départ contient 5 % à 15 % de zircon ;
- la teneur en $Al_2O_3$ est supérieure à 87 %, de préférence supérieure à 89 % et/ou inférieure ou égale à 93%, ou inférieure à 91 %, en pourcentages en masse ;
- la teneur en $ZrO_2$+$HfO_2$ est supérieure à 5 % et/ou inférieure à 10 %, de préférence inférieure à 8 %, en pourcentages en masse ;
- la teneur en $SiO_2$ est inférieure à 4 %, de préférence inférieure à 3 %, en pourcentages en masse ;
- la teneur en CaO est supérieure à 0,5 %, de préférence supérieure à 0,7 % et/ou inférieure à 1,8 %, de préférence inférieure à 1,5 %, de préférence inférieure à 1,3 %, de préférence inférieure à 1,1 %, en pourcentages en masse ;
- la teneur en corindon (phase $Al_2O_3$), en pourcentage en masse sur la base de la quantité totale de phases cristallisées est supérieure à 88 % et/ou inférieure ou égale à 96%, inférieure à 94 %, de préférence inférieure à 92 % ;
- la teneur totale en zircone (phase $ZrO_2$) et hafnie (phase $HfO_2$), éventuellement stabilisés, en pourcentage en masse sur la base de la quantité totale de phases cristallisées est supérieure à 4 % et/ou inférieure à 12 %, de préférence inférieure à 10 %, voire inférieure à 7 % ;
- la teneur en mullite, en pourcentage en masse sur la base de la quantité totale de phases cristallisées, est inférieure à 4 %, de préférence inférieure à 2 %, de préférence sensiblement nulle ;

L'invention concerne également une poudre de particules comprenant plus de 90 %, de préférence plus de 95 %, de préférence sensiblement 100 %, en pourcentages en masse, de particules selon l'invention.
L'invention concerne également un procédé de fabrication de particules frittées selon l'invention, notamment de billes frittées, comprenant les étapes successives suivantes :

a) si nécessaire, broyage d'une ou de plusieurs poudres de matières premières, de préférence par cobroyage, de manière que leur mélange, à l'étape c), conduise à un mélange particulaire présentant une taille médiane inférieure à 0,6 $\mu$m,
b) optionnellement, séchage dudit mélange particulaire,
c) préparation d'une charge de départ à partir dudit mélange particulaire, optionnellement séché, la composition de la charge de départ étant adaptée de manière à obtenir, à l'issue de l'étape g), des particules frittées présentant une composition conforme à celle d'une particule frittée selon l'invention, ladite charge de départ comportant de 4% à 25% de particules de zircon, en pourcentage massique sur la base de la masse de la charge de départ sèche,
d) mise en forme de la charge de départ sous la forme de particules crues,
e) optionnellement, lavage,
f) optionnellement, séchage,
g) frittage à une température de frittage supérieure à 1450°C et inférieure à 1600°C de manière à obtenir des particules frittées.

La charge de départ peut contenir moins de 15%, moins de 10%, moins de 5%, moins de 2%, voire sensiblement pas de mullite, en pourcentage massique sur la base de la charge de départ sèche. Dans le premier mode de réalisation particulier, une partie, voire la totalité de la mullite peut être formée lors du frittage.
L'invention concerne enfin l'utilisation d'une poudre de particules, notamment de billes, selon l'invention, en particulier fabriquées suivant un procédé selon l'invention, en tant qu'agents de broyage ; agents de dispersion en milieu humide ; agents de soutènement, en anglais « propping agents », notamment pour empêcher la fermeture des fractures géologiques profondes créées dans les parois d'un puits d'extraction, en particulier de pétrole ; agents d'échange thermique, par exemple pour lit fluidisé ; ou pour le traitement de surfaces.

**Définitions**

- Par « particule », on entend un produit solide individualisé dans une poudre.
- Une particule frittée est « élaborée à partir d'une charge de départ » lorsqu'elle résulte d'un frittage d'une particule crue obtenue par mise en forme de cette charge de départ.
- On appelle « frittage » la consolidation par traitement thermique à plus de 1100°C d'une particule crue (agglomérat granulaire), avec éventuellement une fusion, partielle ou totale, de certains de ses constituants (mais pas de tous ses constituants, de sorte que la particule crue n'est pas transformée en une masse liquide).
- Par « bille », on entend une particule présentant une sphéricité, c'est-à-dire un rapport entre son plus petit diamètre et son plus grand diamètre, supérieure à 0,6, quelle que soit la façon par laquelle cette sphéricité a été obtenue.
- On appelle « taille » d'une bille (ou d'une particule) la moyenne de sa plus grande dimension dM et de sa plus petite dimension dm : (dM+dm)/2.
- On appelle « taille médiane » d'une poudre de particules, généralement notée $D_{50}$, la taille divisant les particules de cette poudre en première et deuxième populations égales en masse, ces première et deuxième populations ne comportant que des particules présentant une taille supérieure, ou inférieure respectivement, à la taille médiane. La taille médiane peut par exemple être évaluée à l'aide d'un granulomètre laser.
- Par « bille frittée », ou plus largement « particule frittée », on entend une bille (ou particule) solide obtenue par frittage d'une particule crue.
- Par « impuretés », on entend les constituants inévitables, introduits nécessairement avec les matières premières. En particulier, les composés faisant partie du groupe des oxydes, nitrures, oxynitrures, carbures, oxycarbures, carbonitrures et espèces métalliques de sodium et autres alcalins, fer, vanadium et chrome peuvent être des impuretés. A titre d'exemples, on peut citer $Fe_2O_3$, $TiO_2$ ou $Na_2O$. Le carbone résiduel fait partie des impuretés de la composition des particules selon l'invention.
- Lorsqu'il est fait référence à $ZrO_2$ ou à $(ZrO_2+HfO_2)$, il y a lieu de comprendre $ZrO_2$ et des traces de $HfO_2$. En effet, un peu de $HfO_2$, chimiquement indissociable du $ZrO_2$ et présentant des propriétés semblables, est toujours naturellement présent dans les sources de $ZrO_2$ à des teneurs généralement inférieures à 3 %, en pourcentage massique sur la base de $ZrO_2+HfO_2$. L'oxyde d'hafnium n'est pas considéré comme une impureté.
- Par « précurseur » d'un oxyde, on entend un constituant apte à fournir ledit oxyde lors de la fabrication d'une particule selon l'invention.

Dans un souci de clarté, on utilise les termes « $ZrO_2$ », « $HfO_2$ » et « $Al_2O_3$ » pour désigner les teneurs de ces oxydes dans la composition, et « zircone », « hafnie » et « corindon » pour désigner des phases cristallisées de ces oxydes constituées de $ZrO_2$, de $HfO_2$ et de $Al_2O_3$, respectivement. Ces oxydes peuvent cependant être également présents sous d'autres phases, en particulier sous forme de zircon ($ZrSiO_4$), ou de mullite.

Tous les pourcentages relatifs aux compositions chimiques sont des pourcentages en masse sur la base de la masse de la particule, sauf indication contraire.

Tous les pourcentages relatifs aux phases cristallisées sont des pourcentages en masse sur la base de la masse totale des phases cristallisées présentes dans la particule, sauf indication contraire.

Par « contenant un », « comprenant un » ou « comportant un », on entend « comportant au moins un », sauf indication contraire.

**Description détaillée**

Pour fabriquer des particules frittées selon l'invention, on peut procéder suivant les étapes a) à g) décrites ci-dessus et détaillées ci-dessous.

**A l'étape a),** les poudres de matières premières peuvent être broyées individuellement ou, de préférence, cobroyées, si leur mélange dans des proportions adaptées pour préparer la charge de départ, à l'étape c), ne conduit pas à un mélange particulaire présentant une taille médiane inférieure à 0,6 μm. Ce broyage peut être un broyage humide.

De préférence, un broyage ou un cobroyage est effectué de manière que la taille médiane dudit mélange particulaire soit inférieure à 0,5 μm, de préférence inférieure à 0,4 μm.

De préférence, les poudres utilisées, notamment les poudres de zircon $ZrSiO_4$, d'alumine $Al_2O_3$, de $CaCO_3$, d'un verre contenant CaO, de préférence un verre de silice contenant CaO, d'un feldspath calcique, de $Y_2O_3$, de $CeO_2$, d'aluminosilicate comme une argile, de $ZrO_2$, et de mullite présentent chacune une taille médiane inférieure à 5 μm, voire inférieure à 3 μm, inférieure à 1 μm, inférieure à 0,7 μm, de préférence inférieure à 0,6 μm, de préférence inférieure à 0,5 μm, voire inférieure à 0,4 μm. Avantageusement, lorsque que chacune de ces poudres présente une taille médiane inférieure à 0,6 μm, de préférence inférieure à 0,5 μm, voire inférieure à 0,4 μm, l'étape a) est optionnelle.

De préférence, la poudre de zircon utilisée présente une aire spécifique avant broyage, calculée par la méthode BET, supérieure à 5 m²/g, de préférence supérieure à 8 m²/g, de préférence supérieure à 10 m²/g, et/ou inférieure à 30 m²/g. Avantageusement, le broyage à l'étape a), généralement en suspension, en est facilité.

De préférence, la poudre d'alumine utilisée présente une taille médiane inférieure à 7 μm, de préférence inférieure à 6 μm, voire inférieure à 3 μm, voire inférieure à 2 μm, voire inférieure à 1 μm, voire inférieure à 0,5 μm. Avantageusement, la formation de mullite à partir de ladite poudre d'alumine et de la silice présente dans le mélange particulaire ou créée lors de l'étape g) en est facilitée, ainsi que le frittage à l'étape g).

A l'étape b), optionnelle, les poudres de matières premières broyées sont séchées, par exemple en étuve ou par atomisation, en particulier si elles ont été obtenues par broyage humide. De préférence, la température et/ou la durée de l'étape de séchage sont adaptées de manière à ce que l'humidité résiduelle des poudres de matières premières soit inférieure à 2 %, voire inférieure à 1,5 %. Les poudres obtenues peuvent être désagglomérées.

A l'étape c), on prépare à température ambiante une charge de départ, comportant des poudres de $ZrSiO_4$, d'$Al_2O_3$, et optionnellement de $CaCO_3$ et/ou d'un verre contenant CaO, de préférence un verre de silice contenant CaO et/ou d'un feldspath calcique et/ou d'$Y_2O_3$ et/ou d'aluminosilicate et/ou de $ZrO_2$ et/ou de mullite.

Ces poudres peuvent également être remplacées, au moins partiellement, par des poudres de précurseurs de ces oxydes, introduits dans des quantités équivalentes.

En particulier, une partie, voire la totalité du zircon et/ou de la mullite d'une particule selon l'invention peuvent résulter de la présence, dans la charge de départ, de ces phases cristallisées.

Les poudres apportant les oxydes ou les précurseurs sont de préférence choisies de manière que, dans les particules frittées, la teneur totale en constituants autres que $ZrO_2$, $HfO_2$, $SiO_2$, $Al_2O_3$ et CaO soit inférieure à 5 %, en pourcentage massique.

La charge de départ contient une poudre de zircon, c'est-à-dire de particules de $ZrSiO_4$, dans une quantité supérieure ou égale à 4 %, de préférence supérieure à 5 % et inférieure à 25 %, en masse sur la base de la masse de la charge de départ sèche. Dans le premier mode de réalisation particulier, la charge de départ contient une poudre de zircon en une quantité supérieure ou égale à 15 %, de préférence supérieure à 20 % et inférieure à 25 %, sur la base de la masse de la charge de départ sèche. Dans le deuxième mode de réalisation particulier, la charge de départ contient une poudre de zircon en une quantité supérieure ou égale à 4 %, de préférence supérieure à 5 % et inférieure ou égale à 15 %, sur la base de la masse de la charge de départ sèche.

De préférence, la charge de départ contient une poudre d'alumine, c'est-à-dire de particules de phase $Al_2O_3$, dans une quantité supérieure ou égale à 70 % et de préférence inférieure à 94 %, en masse sur la base de la masse de la charge de départ sèche. De préférence, ladite poudre d'alumine est une poudre d'alumine réactive et/ou une poudre d'alumine calcinée et/ou une poudre d'alumine de transition. De préférence ladite poudre d'alumine est une poudre d'alumine réactive. Dans le premier mode de réalisation particulier, la charge de départ contient de préférence une poudre d'alumine en une quantité supérieure à 72 %, de préférence supérieure à 74 % et inférieure ou égale à 79 %, de préférence inférieure à 77 %, sur la base de la masse de la charge de départ sèche. Dans le deuxième mode de réalisation particulier, la charge de départ contient de préférence une poudre d'alumine en une quantité supérieure à 85 %, de préférence supérieure à 87 % et de préférence inférieure ou égale à 93 %, sur la base de la masse de la charge de départ sèche.

La charge de départ peut contenir une poudre comportant CaO, de préférence choisie parmi $CaCO_3$, un verre contenant CaO, de préférence un verre de silice contenant CaO, un feldspath calcique, en une quantité adaptée pour que la teneur en CaO dans les particules frittées soit conforme à l'invention.

La charge de départ peut ne pas contenir de poudre comportant CaO, ledit oxyde étant par exemple apporté par l'électrolyte d'un bain de gélification qui réagit avec un agent de gélification introduit dans la charge de départ, ledit électrolyte pouvant être par exemple une solution de sel de calcium.

La charge de départ peut comporter moins de 7 %, moins de 5 %, moins de 2 % de zircone, c'est-à-dire de particules de $ZrO_2$, en pourcentage massique sur la base des phases cristallisées, voire ne pas en comporter. Une partie de la zircone, voire toute la zircone peut en effet provenir de la dissociation du zircon lors du frittage de l'étape g).

La charge de départ peut comporter moins de 10 %, moins de 5 % de mullite, en pourcentage massique sur la base des phases cristallisées, voire ne pas comporter de mullite. Une partie de la mullite, voire toute la mullite, peut être générée *in situ* lors du frittage de l'étape g), de préférence à partir de l'alumine et la silice provenant de la dissociation du zircon $ZrSiO_4$ en zircone $ZrO_2$ et en silice $SiO_2$.

La charge de départ peut comporter une poudre de particules de $Y_2O_3$, en une quantité supérieure à 0,1 %, de préférence supérieure à 0,5 %, voire supérieure à 0,9 %, et/ou inférieure à 3 %, de préférence inférieure à 2 %, voire inférieure à 1,5 % en masse sur la base de la masse de la charge de départ sèche.

La charge de départ peut comporter une poudre de particules de $CeO_2$, en une quantité supérieure à 0,1 %, de préférence supérieure à 0,7 %, de préférence supérieure à 1,5 %, et/ou inférieure à 3 %, voire inférieure à 2,5 %, en masse sur la base de la masse de la charge de départ sèche.

La charge de départ peut comporter une poudre de particules d'aluminosilicate, de préférence une poudre d'argile, en une quantité supérieure à 1%, de préférence supérieure à 1,5 % et de préférence inférieure à 3 %.

La charge de départ peut comporter une poudre de silice, c'est-à-dire de particules de $SiO_2$, en une quantité de préférence supérieure à 0,5 %, de préférence supérieure à 1 %, et/ou inférieure à 5 %, de préférence inférieure à 3 %, en masse sur la base de la masse de la charge de départ sèche.

De préférence, aucune matière première autre que celles apportant $ZrO_2$+$HfO_2$, $SiO_2$, $Al_2O_3$, CaO et optionnellement $Y_2O_3$ et/ou $CeO_2$, et leurs précurseurs n'est introduite volontairement dans la charge de départ, les autres constituants présents étant des impuretés.

La charge de départ peut en outre comporter un solvant, de préférence de l'eau, dont la quantité est adaptée à la méthode de mise en forme de l'étape d).

Comme cela est bien connu de l'homme du métier, la charge de départ est adaptée au procédé de mise en forme de l'étape d).

La mise en forme peut en particulier résulter d'un procédé de gélification. A cet effet, un solvant, de préférence de l'eau, est ajouté à la charge de départ de manière à réaliser une suspension.

La suspension présente de préférence une teneur massique en matière sèche comprise entre 50 % et 70 %.

La suspension peut encore comporter un ou plusieurs de constituants suivants :

- un dispersant, à raison de 0 à 10 %, en pourcentage massique sur la base de la matière sèche ;
- un modificateur de tension de surface, à raison de 0 à 3 %, en pourcentage massique sur la base de la matière sèche ;
- un agent gélifiant, ou « agent de gélification », à raison de 0 à 2 %, en pourcentage massique sur la base de la matière sèche.

Les dispersants, modificateurs de tension de surface et agents gélifiants sont bien connus de l'homme du métier. Il en est de même des électrolytes adaptés pour réagir avec un agent gélifiant déterminé.

A titre d'exemples, on peut citer,

- comme dispersants, la famille des polyméthacrylates de sodium ou d'ammonium, la famille des polyacrylates de sodium ou d'ammonium, la famille des acides polyacyliques (sels de sodium ou d'ammonium), ou autres polyélectrolytes, la famille des citrates, par exemple d'ammonium, la famille des phosphates de sodium, et la famille des esters de l'acide carbonique ;
- comme modificateurs de tension de surface, les solvants organiques tels que des alcools aliphatiques ;
- comme agents gélifiants, des polysaccharides naturels, formant des composés insolubles au contact d'électrolytes de cation divalent, comme par exemple l'ion $Ca^{2+}$.

La plupart de ces éléments disparaissent pendant les étapes de fabrication ultérieures, en pouvant laisser toutefois subsister quelques traces.

Les poudres d'oxydes et/ou de précurseurs sont de préférence ajoutées dans un mélange d'eau et de dispersants/défloculants dans un broyeur à billes. Après agitation, on ajoute de l'eau dans laquelle a été préalablement dissout un agent gélifiant de manière à obtenir une suspension.

Si la mise en forme résulte d'une extrusion, des polymères thermoplastiques ou des polymères thermodurcissables peuvent être ajoutés à la charge de départ.

**A l'étape d),** tout procédé conventionnel de mise en forme utilisé pour la fabrication de particules frittées, notamment de billes frittées, peut être mis en oeuvre.

Parmi ces procédés, on peut citer :

- les procédés de granulation, mettant par exemple en oeuvre des malaxeurs, des granulateurs, des granulateurs à lit fluidisé, ou des disques de granulation,
- les procédés de gélification,
- les procédés de moulage par injection ou extrusion, et
- les procédés de pressage.

Dans un procédé de gélification, des gouttes de la suspension décrite ci-dessus sont obtenues par écoulement de la suspension à travers un orifice calibré. Les gouttes sortant de l'orifice tombent dans un bain d'une solution de gélification (électrolyte adapté pour réagir avec l'agent gélifiant) où elles durcissent après avoir recouvré une forme sensiblement sphérique.

**A l'étape e),** optionnelle, les particules crues obtenues lors de l'étape précédente sont lavées, par exemple à l'eau.

**A l'étape f),** optionnelle, les particules crues, éventuellement lavées, sont séchées, par exemple à l'étuve.

**A l'étape g),** les particules crues, éventuellement lavées et/ou séchées, sont frittées. De préférence, le frittage s'effectue sous air, de préférence dans un four électrique, de préférence à pression atmosphérique.

Le frittage à l'étape g) est effectué à une température supérieure à 1450°C, de préférence supérieure à 1475°C, de préférence supérieure à 1480°C, de préférence supérieure à 1490°C et inférieure à 1600°C, de préférence inférieure à 1550°C, de préférence inférieure à 1520°C. Une température de frittage égale à 1500°C est bien adaptée. Une température de frittage inférieure à 1450°C ne permet pas d'obtenir une particule présentant une porosité totale inférieure ou égale à 5 %.

De préférence, la durée de frittage est comprise entre 2 et 5 heures. Une durée de frittage égale à 4 heures est bien adaptée.

Les particules frittées obtenues se présentent de préférence sous la forme de billes présentant un plus petit diamètre compris entre 0,005 mm et 10 mm.

La teneur en CaO dans le produit obtenu à l'issue de l'étape g) peut notamment être ajustée par la concentration en agent gélifiant dans la charge de départ à l'étape c) et/ou par le temps de résidence de la particule formée dans l'électrolyte à l'étape d) et/ou par la durée du lavage des particules à l'étape e).

Les règles suivantes, bien connues de l'homme du métier, peuvent être mises en oeuvre de manière à obtenir une particule frittée selon l'invention :

- pour augmenter la quantité de corindon dans la particule frittée : augmenter la quantité de corindon dans la charge de départ et/ou diminuer la température de frittage afin de limiter la formation de mullite *in situ ;*

- pour diminuer la quantité de corindon dans la particule frittée : diminuer la quantité de corindon dans la charge de départ et/ou augmenter la température de frittage ;

- pour augmenter la quantité de zircone dans la particule frittée : augmenter la quantité de zircone dans la charge de départ et/ou augmenter la quantité de zircon dans la charge de départ ;

- pour augmenter la quantité de mullite dans la particule frittée : augmenter la quantité de mullite dans la charge de départ et/ou augmenter la quantité de zircon et/ou augmenter la température de frittage afin de favoriser la formation de mullite *in situ ;*

- pour diminuer la quantité de mullite dans la particule frittée : diminuer la quantité de mullite dans la charge de départ et/ou diminuer la quantité de zircon et/ou diminuer la température de frittage afin de limiter la formation de mullite *in situ ;*

- pour diminuer la porosité totale de la particule frittée à charge de départ définie : rapprocher la température de frittage du domaine de températures de frittage préféré et/ou augmenter la quantité de poudre de silice dans la charge de départ et/ou augmenter la quantité de poudre d'aluminosilicate dans la charge de départ ;

- pour augmenter la quantité de CaO dans la particule frittée : augmenter la quantité de la matière première apportant CaO dans la charge de départ et/ou augmenter la quantité d'agent gélifiant dans la charge de départ et/ou augmenter le temps de résidence de la particule dans l'électrolyte à l'étape d) et/ou diminuer la durée du lavage à l'étape e).

Les particules frittées selon l'invention sont particulièrement bien adaptées comme agents de broyage ou comme agents de dispersion en milieu humide, ainsi que pour le traitement de surfaces. L'invention concerne donc également l'utilisation d'une pluralité de particules, notamment de billes selon l'invention, notamment fabriquées suivant un procédé selon l'invention, en tant qu'agents de broyage, ou agents de dispersion en milieu humide.

La résistance à l'usure des particules selon l'invention est d'autant plus remarquable qu'elle est obtenue grâce à l'utilisation de matières premières, notamment le zircon, permettant une diminution du coût.

On peut noter cependant que les propriétés des particules selon l'invention, notamment leur résistance mécanique, leur densité, ainsi que leur facilité d'obtention, peuvent les rendre aptes à d'autres applications, notamment comme agents de soutènement ou d'échange thermique, ou encore pour le traitement de surfaces (par projection des particules selon l'invention en particulier).

L'invention concerne donc encore un dispositif choisi parmi une suspension, un broyeur, un appareil de traitement de surfaces et un échangeur thermique, ledit dispositif comportant une poudre de particules selon l'invention.

## **Exemples**

Les exemples non limitatifs suivants sont donnés dans le but d'illustrer l'invention.

Protocoles de mesure

Les méthodes suivantes ont été utilisées pour déterminer certaines propriétés de différents mélanges de billes frittées. Elles permettent une excellente simulation du comportement réel en service dans l'application de microbroyage.

Pour déterminer la **résistance à l'usure dite « planétaire »**, 20 ml (volume mesuré à l'aide d'une éprouvette graduée) de billes à tester de taille comprise entre 1,2 et 1,4 mm, sont pesées (masse $m_0$) et introduites dans un des 4 bols revêtus d'alumine frittée dense, de contenance de 125 ml, d'un broyeur planétaire rapide du type PM400 de marque RETSCH. Sont ajoutés dans le même bol contenant déjà les billes, 2,2 g de carbure de silicium de marque Presi (présentant une taille médiane D50 de 23 $\mu$m) et 40 ml d'eau. Le bol est refermé et mis en rotation (mouvement planétaire) à 400 tr/min avec inversion du sens de rotation toutes les minutes pendant 1h30. Le contenu du bol est ensuite lavé sur un tamis de 100 $\mu$m de manière à enlever le carbure de silicium résiduel ainsi que les arrachements de matière dus à l'usure lors du broyage. Après un tamisage sur un tamis de 100 $\mu$m, les billes sont séchées à l'étuve à 100 °C pendant 3h puis pesées (masse $m_1$). Lesdites billes (masse $m_1$) sont à nouveau introduites dans un des bols avec une suspension de SiC (même concentration et quantité que précédemment) et subissent un nouveau cycle de broyage, identique au précédent. Le contenu du bol est ensuite lavé sur un tamis de 100 $\mu$m de manière à enlever le carbure de silicium résiduel ainsi que les arrachements de matière dus à l'usure lors du broyage. Après un tamisage sur un tamis de 100 $\mu$m, les billes sont séchées à l'étuve à 100 °C pendant 3h puis pesées (masse $m_2$). Lesdites billes (masse $m_2$) sont à nouveau introduites dans un des bols avec une suspension de SiC (même concentration et quantité que précédemment) et subissent un nouveau cycle de broyage, identique au précédent. Le contenu du bol est ensuite lavé sur un tamis de 100 $\mu$m de manière à enlever le carbure de silicium résiduel ainsi que les arrachements de matière dus à l'usure lors du broyage. Après un tamisage sur un tamis de 100 $\mu$m, les billes sont séchées à l'étuve à 100 °C pendant 3h puis pesées (masse $m_3$).

L'usure planétaire (UP) est exprimée en pourcentage (%) et est égale à la perte de masse des billes ramenée à la masse initiale des billes, soit : $100(m_0-m_3) / (m_0)$ ; le résultat UP est donné dans le tableau 1.

On considère que les résultats sont particulièrement satisfaisants si les produits présentent :

- une amélioration de la résistance à l'usure planétaire (UP) d'au moins 10 % par rapport à celle de l'exemple Référence 1 pour les particules selon l'invention présentant une teneur en $Al_2O_3$ inférieure ou égale à 79%, et

- une résistance à l'usure planétaire (UP) au moins équivalente à celle de l'exemple Référence 1 pour les particules selon l'invention présentant une teneur en $Al_2O_3$ supérieure à 79%.

Les **phases cristallisées** présentes dans les particules frittées selon l'invention sont mesurées par diffraction X, par exemple au moyen d'un appareil du type diffractomètre X'Pert PRO de la société Panalytical pourvu d'un tube DX en cuivre. L'acquisition du diagramme de diffraction est réalisée à partir de cet équipement, sur un domaine angulaire $2\theta$ compris entre 5° et 80°, avec un pas de 0,017°, et un temps de comptage de 60s/pas. L'optique avant comporte une fente de divergence programmable utilisée fixe de 1/4°, des fentes de Soller de 0,04 rad, un masque égal à 10mm et une fente anti diffusion fixe de 1/2°. L'échantillon est en rotation sur lui-même afin de limiter les orientations préférentielles. L'optique arrière comporte une fente anti diffusion programmable utilisée fixe de 1/4°, des fentes de Soller de 0,04 rad et un filtre Ni. Le traitement du diagramme obtenu est réalisé avec le logiciel High Score Plus par affinement Rietveld, la fiche de la mullite étant celle de $Al_{4,5}S_{1,5}O_{9,74}$ décrite dans "Crystal structure and compressibility of 3:2 mullite", Balzar et Al., American Mineralogist; December 1993; v. 78; no. 11-12; p. 1192-1196. Les différents paramètres sont affinés dans le but de réduire au maximum la valeur « R Bragg ».

La quantité de **phase amorphe** présente dans les particules frittées selon l'invention est mesurée par diffraction X, par exemple au moyen d'un appareil du type diffractomètre X'Pert PRO de la société Panalytical pourvu d'un tube DX en cuivre. L'acquisition du diagramme de diffraction est réalisée à partir de cet équipement, de la même manière que pour la détermination des phases cristallisées présentes dans les particules. La méthode appliquée consiste en l'ajout d'une quantité connue d'un étalon totalement cristallisé, dans le cas présent de l'oxyde de zinc, ZnO en une quantité massique égale à 20%, sur la base de la masse d'oxyde de zinc et d'échantillon de particules frittées selon l'invention.

La **porosité totale,** en %, est évaluée par la formule suivante :

$$\text{Porosité totale} = 100.(1 - (d_{billes}/d_{billes\ broyées})),$$

avec

- $d_{billes}$, la densité sur billes non broyées obtenues à l'aide d'un pycnomètre hélium (AccuPyc 1330 de la société Micromeritics®), selon une méthode basée sur la mesure du volume de gaz déplacé (dans le cas présent l'Hélium), et

- $d_{billes}$ broyées est la densité sur poudre provenant du broyage des billes réalisé avec un broyeur à sec de type annulaire de marque Aurec pendant 40s et suivi d'un tamisage pour ne conserver pour la mesure que la poudre passant à travers un tamis de 160 $\mu$m.

Protocole de fabrication

Des billes frittées ont été préparées à partir d'une poudre de zircon, présentant une aire spécifique de l'ordre de 8 m$^2$/g et une taille médiane égale à 1,5 $\mu$m, d'une poudre d'alumine de pureté égale à 99,5 % et de taille médiane inférieure à 5 $\mu$m, et, en fonction des exemples réalisés, d'une poudre d'argile de taille médiane inférieure à 53 $\mu$m, présentant une perte au feu réalisée à 1000°C comprise entre 10 % et 15 % et présentant une teneur totale $SiO_2$ + $Al_2O_3$ supérieure à 82 %, d'une poudre d'$Y_2O_3$, de pureté en oxydes de terres rares supérieure à 99,9 % et de taille médiane inférieure à 10 $\mu$m, et d'une poudre de $CeO_2$ de pureté supérieure à 99,5 % et de taille médiane inférieure à 10 $\mu$m.

Ces poudres ont été mélangées puis cobroyées en milieu humide jusqu'à obtention d'un mélange particulaire présentant une taille médiane supérieure à 0,4 $\mu$m, à l'aide de billes en zircone yttriée, dont la teneur massique en $Y_2O_3$ était égale à 5,2%. Ce broyage peut être une source de zircone et d'oxyde d'yttrium, de par l'usure desdites billes lors du broyage des poudres. Le mélange particulaire a ensuite été séché.

Une charge de départ consistant en une suspension aqueuse comportant, en pourcentages en masse sur la base de la matière sèche, 1 % d'un dispersant de type acide carboxylique, 0,6 % d'un dispersant de type phosphate de sodium et 0,4 % d'un agent gélifiant, à savoir un polysaccharide de la famille des alginates, a ensuite été préparée à partir de ce mélange particulaire.

Un broyeur à billes a été utilisé pour cette préparation de manière à obtenir une bonne homogénéité de la charge de départ : Une solution contenant l'agent gélifiant a d'abord été formée. Successivement on a ajouté dans de l'eau, le mélange particulaire et les dispersants. La solution contenant l'agent gélifiant a ensuite été ajoutée. Le mélange ainsi obtenu a été agité pendant 8 heures. La taille des particules a été contrôlée par sédigraphie à l'aide d'un sédigraphe Sedigraph 5100 commercialisé par la société Micromeritics® (taille médiane < 0,4$\mu$m), et de l'eau a été ajoutée en une quantité déterminée pour obtenir une suspension aqueuse à 66 % en matière sèche et une viscosité, mesurée au viscosimètre Brookfield à l'aide du mobile LV3 à une vitesse égale à 20 tours/minutes, inférieure à 5000 centipoises. Le pH de la suspension était alors d'environ 8.

La suspension a été forcée à travers un trou calibré et à un débit permettant d'obtenir après frittage des billes d'environ 1,2 mm à 1,4 mm. Les gouttes de suspension tombaient dans un bain de gélification à base d'un électrolyte (sel de cation divalent $Ca^{2+}$), réagissant avec l'agent gélifiant. Les billes crues ont été collectées, lavées, puis séchées à 80°C pour éliminer l'humidité. Les billes ont ensuite été transférées dans un four de frittage où elles ont été portées, à une vitesse de 100°C/h, jusqu'à la température de frittage Tf voulue. A la fin d'un palier de 4 heures à la température Tf, la descente en température a été effectuée par refroidissement naturel.

Résultats

Les résultats obtenus sont résumés dans le tableau 1 suivant.

Tableau 1

| Exemples | Réf.1 (*) | 1(*) | 2(*) | 3(*) | 4(*) | 5 | 6 | 7 | 8 | 9 | 10(*) | 11(*) | 12(*) | 13(*) | 14 | 15 | 16 | 17(*) | 18 | 19 |
|---|---|---|---|---|---|---|---|---|---|---|---|---|---|---|---|---|---|---|---|---|
| Température de frittage Tf (°C) | - | 1500 | 1600 | 1500 | 1500 | 1500 | 1500 | 1500 | 1500 | 1500 | 1600 | 1500 | 1600 | 1500 | 1500 | 1500 | 1500 | 1450 | 1500 | 1600 |
| **Composition du mélange particulaire (pourcentages massiques)** | | | | | | | | | | | | | | | | | | | | |
| Poudre de zircon | - | 21,9 | 22,3 | 22,5 | 22,3 | 22 | 22,5 | 22,2 | 22 | 22,5 | 22,3 | 22,5 | 22 | 22,2 | 9,8 | 9,8 | 4,9 | 21,9 | 5 | 5 |
| Poudre d'alumine | - | 74,1 | 75,6 | 76,2 | 76,3 | 74,7 | 76,2 | 76,6 | 74,7 | 76,2 | 75,6 | 76,2 | 74,7 | 74,5 | 88,2 | 87,6 | 92,8 | 74 | 94,7 | 94,7 |
| Poudre d'$Y_2O_3$ | - | - | - | 1,3 | 1,4 | 1,3 | 1,3 | 1,2 | 1,3 | 1,3 | - | 1,3 | 1,3 | 1,3 | - | 0,6 | 0,3 | 0,5 | 0,3 | 0,3 |
| Poudre de Ce02 | - | - | - | - | - | - | - | - | - | - | 2,1 | - | - | - | - | - | - | 3,6 | - | - |
| Poudre d'argile | - | 4,1 | 2,1 | - | - | 2 | - | - | - | - | - | - | 2 | - | 2 | 2 | 2 | - | - | - |
| **Analyse chimique après frittage (pourcentages massiques)** | | | | | | | | | | | | | | | | | | | | |
| $Al_2O_3$ (%) | 75,8 | 73,9 | 72,3 | 78,1 | 74,7 | 73 | 73,1 | 72,8 | 71,3 | 73,1 | 71,4 | 75,5 | 72,7 | 74,7 | 85,2 | 84,7 | 89,2 | 72,8 | 90,3 | 90,3 |
| $ZrO_2 + HfO_2$ (%) | 15,3 | 14,1 | 16,5 | 13,4 | 15,2 | 16,1 | 16,7 | 16 | 16,4 | 16,6 | 16,3 | 13,1 | 16,1 | 14,7 | 8,7 | 9,1 | 6 | 14,1 | 6,3 | 6,3 |
| $SiO_2$ (%) | 7,3 | 7,1 | 7,3 | 5,8 | 7 | 8,2 | 7,2 | 7,8 | 8,1 | 7,5 | 7,3 | 5,7 | 8,3 | 6,5 | 4,2 | 3,9 | 2,2 | 7 | 1,8 | 1,8 |
| CaO (%) | 0,58 | 0,2 | 0,35 | 0,37 | 0,5 | 0,74 | 0,85 | 1,02 | 1,7 | 0.61 | 1,01 | 3,59 | 0,74 | 2,27 | 1,29 | 0,84 | 1,22 | 1,43 | 0,38 | 0,38 |
| Autres constituants (%) | 1,02 | 4,7 | 3,55 | 2,33 | 2,6 | 1,96 | 2,15 | 2,38 | 2,5 | 2.19 | 3,99 | 2,11 | 2,16 | 1,83 | 0,61 | 1,46 | 1,38 | 4,67 | 1,22 | 1,22 |
| Dont $Y_2O_3$ (% | 0 | 0 | 0 | 1,15 | 1,42 | 1,4 | 1,49 | 1,43 | 1,37 | 1.49 | 0 | 1,11 | 1,4 | 1,31 | 0,2 | 0,72 | 0,41 | 0,54 | 0,47 | 0,47 |
| Dont $CeO_2$ (% | 0 | 4,1 | 2,04 | 0 | 0 | 0 | 0 | 0 | 0 | 0 | 2,02 | 0 | 0 | 0 | 0 | 0 | 0 | 3,4 | 0 | 0 |
| **Phases cristallisées, en % en masse sur la base de la masse des phases cristallisées** | | | | | | | | | | | | | | | | | | | | |
| Corindon (%) | 66 | 71 | 68 | 78 | 75 | 76 | 75 | 74 | 72 | 67 | 75 | 85 | 66 | 77 | <u>92</u> | 94 | 90 | 68 | 94 | 92 |
| Zircone + hafnie (%) | 15 | 18 | 20 | 12 | 15 | 12 | 15 | 16 | 19 | 17 | 23 | 15 | 17 | 17 | 8 | 6 | 10 | 17 | 6 | 8 |

(suite)

| Exemples | Réf.1 (*) | 1(*) | 2(*) | 3(*) | 4(*) | 5 | 6 | 7 | 8 | 9 | 10(*) | 11(*) | 12(*) | 13(*) | 14 | 15 | 16 | 17(*) | 18 | 19 |
|---|---|---|---|---|---|---|---|---|---|---|---|---|---|---|---|---|---|---|---|---|
| Mullite (%) | 19 | 10 | 10 | 10 | 10 | 11 | 10 | 10 | 9 | 15 | 2 | 0 | 17 | 6 | 0 | 0 | 0 | 14 | 0 | 0 |
| Autres phases cristallisées (%) | 0 | 1 | 2 | 0 | 0 | 1 | 0 | 0 | 0 | 1 | 0 | 0 | 0 | 0 | 0 | 0 | 0 | 1 | 0 | 0 |
| Phase amo rphe, en % en masse sur la base de la ma sse de la la parti cule | | | | | | | | | | | | | | | | | | | | |
| % de phase amorphe | nd | nd | nd | nd | nd | nd | nd | nd | nd | 5 | nd | nd | nd | nd | nd | 6 | nd | nd | nd | nd |
| Caractéristiques après frittage | | | | | | | | | | | | | | | | | | | | |
| Porosité totale (%) | 2,7 | 4,3 | 0,3 | 1,5 | 2,2 | 4,6 | 1,1 | 1,5 | 1,6 | 1 | 0,3 | 3,8 | 3,6 | 2,5 | 1,7 | 3,8 | 2,2 | 8,7 | 4,9 | 2,1 |
| Densité billes | 3,8 | nd | 3,99 | 3,75 | nd | 3,7 | 3,75 | nd | 3,83 | 3,89 | 3,95 | 3,9 | 3,76 | 3,74 | 3,73 | 3,85 | 3,83 | 3,88 | 3,92 | 3,91 |
| Usure planétaire UP (en %) | 2,3 | 4,97 | 4,9 | 3,12 | 2,4 | 1,72 | 1,84 | 1,8 | 2,02 | 2,1 | 3,15 | 4,32 | 2,89 | 2,4 | 1,9 | 2,1 | 2,15 | 8 | 2,3 | 1,9 |
| UP% Référence 1 | - | -116 | -113 | -36 | -4 | 25 | 20 | 22 | 13 | 9 | -36 | -88 | -26 | -4 | 17 | 9 | 7 | -248 | 0 | 17 |
| (*) : hors invention nd : non déterminé | | | | | | | | | | | | | | | | | | | | |

Les billes de référence de l'exemple « Réf. 1 », hors invention, sont des billes frittées couramment utilisées dans les applications de broyage.

Les exemples montrent que, de façon surprenante, les billes selon l'invention testées présentent des performances remarquables par rapport aux billes de référence.

Une comparaison des produits selon les exemples 1 à 8, 11 et 13 présentant sensiblement la même teneur en mullite et sensiblement la même analyse chimique hors CaO, avec une teneur en $Al_2O_3$ inférieure à 79%, montre l'influence de CaO sur la résistance à l'usure des billes : les produits selon les exemples 1, 2, 3, 4, 11 et 13, hors invention, qui présentent une résistance à l'usure UP% dégradée par rapport au produit selon la référence 1 contiennent 0,2 %, 0,35 %, 0,37 %, 0,5 %, 3,59 % et 2,27 % de CaO, respectivement. Les produits selon les exemples 5, 6, 7 et 8 qui présentent une résistance à l'usure UP% améliorée par rapport au produit selon la référence 1 contiennent 0,74 %, 0,85 %, 1,02 % et 1,7 % de CaO, respectivement.

Le produit selon l'exemple 17, hors invention, illustre le fait que si la porosité totale atteint 8,7 %, la résistance à l'usure UP% est nettement dégradée par rapport au produit de la référence 1.

Le produit selon l'exemple 10, hors invention, montre qu'une teneur en zircone + hafnie de 23% dégrade de 36% la résistance à l'usure UP% par rapport au produit de la référence 1. Ce produit illustre également l'intérêt d'une teneur minimale en mullite pour des teneurs en alumine inférieures à 79%.

Les produits selon les exemples 5, 6 et 7 illustrent le fait que pour une teneur en $Al_2O_3$ égale à 73 %, 73,1 % et 72,8 %, respectivement, et une teneur en CaO égale à 0,74 %, 0,85 % et 1,02 %, respectivement, une teneur en mullite égale à 10 % ou 11 % augmente significativement la résistance à l'usure UP% par rapport au produit de la référence 1.

Une comparaison des produits des exemples 9 et 5 illustre le fait que la résistance à l'usure UP% atteint une valeur maximale pour une teneur en mullite égale à 11%, pour des produits présentant une teneur en $Al_2O_3$ égale à 73,1 % et 73 %, respectivement. Le produit selon l'exemple 12, hors invention, présente une teneur en mullite égale à 17% et une résistance à l'usure UP% dégradée de 26 % par rapport au produit de la référence 1.

Les produits selon les exemples 14 à 16 et 19, selon l'invention, présentant une teneur en $Al_2O_3$ égale à 88,2 %, 87,6 %, 92,8 % et 94,7%, respectivement, montrent une amélioration de la résistance à l'usure UP(%) égale à 17 %, 9 %, 7 % et 17 %, respectivement.

Le produit de l'exemple 18, selon l'invention, présentant une teneur en $Al_2O_3$ égale à 94,7 % et une porosité totale égale à 4,9 %, montre une usure UP(%) comparable à celle du produit de la référence 1.

Les produits des exemples 5, 6 et 7 sont les produits préférés.

Bien entendu, l'invention n'est pas limitée aux exemples et modes de réalisation décrits ci-dessus. En particulier, d'autres systèmes de gélification conviennent pour fabriquer une bille céramique selon l'invention. Ainsi, US 5,466,400, FR 2 84 24 38 et US 4,063,856 décrivent des procédés sol-gel applicables. FR 2 84 24 38 et US 4,063,856 utilisent un système de gélification proche de celui décrit ci-dessus (à base d'alginate) alors que US 5,466,400 décrit un système de gélification très différent.

Le procédé décrit dans US 2009/0036291 et les procédés de formation de billes par pressage ou par granulation sont également envisageables.

Les différents modes de réalisation peuvent être combinés.

**Revendications**

1. Particule frittée, élaborée à partir d'une charge de départ contenant 4 % à 25 % de zircon, en pourcentage massique sur la base de la masse de la charge de départ sèche, ladite particule frittée présentant :

   - la composition chimique suivante, en pourcentages en masse :

      70 % $\leq Al_2O_3$, $Al_2O_3$ constituant le complément à 100 % ;
      3 % $\leq ZrO_2+HfO_2 \leq$ 18 %, avec $HfO_2 \leq$ 1 % ;
      1 % $\leq SiO_2 \leq$ 10 % ;
      0,3 % $\leq CaO \leq$ 2 %, avec $CaO \geq$ 0,6 % si $Al_2O_3 \leq$ 79 % ;
      moins de 5 % d'autres constituants, et

   - les phases cristallisées suivantes, en pourcentages en masse sur la base de la quantité totale de phases cristallisées :

      65 % $\leq$ corindon; le corindon constituant le complément à 100 % ;
      3 % $\leq$ zircone + hafnie, éventuellement stabilisés $\leq$ 21 % ;

mullite ≤ 16 % ;
moins de 5 % d'autres phases cristallisées, et

- une porosité totale inférieure ou égale à 5 %.

**2.** Particule frittée selon la revendication précédente, comportant plus de 0,1% d'$Y_2O_3$ et/ou plus de 0,1% de $CeO_2$.

**3.** Particule frittée selon l'une quelconque des revendications précédentes, dans laquelle la teneur en « autres constituants » autres que $Y_2O_3$ et $CeO_2$ est inférieure à 3,0 %.

**4.** Particule frittée selon l'une quelconque des revendications précédentes, dans laquelle les oxydes représentent plus de 95 % de la masse totale de ladite particule.

**5.** Particule frittée selon l'une quelconque des revendications précédentes, dans laquelle une partie de la mullite est créée lors du frittage.

**6.** Particule frittée selon l'une quelconque des revendications précédentes, présentant une teneur en « autres phases cristallisées » inférieure à 4%, en pourcentage en masse sur la base de la quantité totale de phases cristallisées et/ou présentant une quantité massique de phase amorphe, en pourcentage en masse par rapport à la masse de la particule, inférieure à 20%.

**7.** Particule frittée selon l'une quelconque des revendications précédentes, présentant une porosité totale inférieure à 4,5% et/ou présentant une densité supérieure à 3,6 g/cm$^3$ et inférieure à 4,20 g/cm$^3$.

**8.** Particule frittée selon l'une quelconque des revendications précédentes, présentant une taille inférieure à 10 mm et supérieure à 0,005 mm et/ou une sphéricité, c'est-à-dire un rapport entre son plus petit diamètre et son plus grand diamètre, supérieure à 0,7.

**9.** Particule frittée selon l'une quelconque des revendications précédentes, élaborée à partir d'une charge de départ contenant 15 % à 25 % de zircon, en pourcentage massique sur la base de la masse de la charge de départ sèche, ladite particule frittée présentant :

- la composition chimique suivante, en pourcentages en masse :

70 % ≤ $Al_2O_3$, $Al_2O_3$ constituant le complément à 100 % ;
13 % ≤ $ZrO_2$+$HfO_2$ ≤ 18 %, avec $HfO_2$ ≤ 1 % ;
5 % ≤ $SiO_2$ ≤ 9 % ;
0,6 % ≤ CaO ≤ 2 % ;
moins de 5 % d'autres constituants, et

- les phases cristallisées suivantes, en pourcentages en masse sur la base de la quantité totale de phases cristallisées :

65 % ≤ corindon; le corindon constituant le complément à 100 % ;
10 % ≤ zircone + hafnie, éventuellement stabilisés : ≤ 21 % ;
4 % ≤ mullite ≤ 16 % ;
moins de 5 % d'autres phases cristallisées, et

- une porosité totale inférieure ou égale à 5 %.

**10.** Particule frittée selon la revendication précédente, dans laquelle la charge de départ contient 20 % à 25 % de zircon, en pourcentage massique sur la base de la masse de la charge de départ sèche et/ou la teneur en $Al_2O_3$ est supérieure à 72 % et/ou inférieure à 78 %, en pourcentages en masse, et/ou la teneur en $ZrO_2$+$HfO_2$ est supérieure à 15 % et/ou inférieure à 17 %, en pourcentages en masse, et/ou la teneur en $SiO_2$ est supérieure à 6 % et/ou inférieure à 8,5 %, en pourcentages en masse, et/ou la teneur en CaO est supérieure à 0,7 % et/ou inférieure à 1,8 %, en pourcentages en masse.

**11.** Particule frittée selon l'une quelconque des deux revendications immédiatement précédentes, présentant une teneur en corindon supérieure à 68 % et/ou inférieure à 82 %, en pourcentage en masse sur la base de la quantité totale de phases cristallisées, et/ou présentant une teneur en zircone + hafnie, éventuellement stabilisés, supérieure à 11 % et/ou inférieure à 19 %, en pourcentage en masse sur la base de la quantité totale de phases cristallisées, et/ou présentant une teneur en mullite supérieure à 5% et/ou inférieure à 14%, en pourcentage en masse sur la base de la quantité totale de phases cristallisées.

12. Particule frittée selon l'une quelconque des revendications 1 à 8, élaborée à partir d'une charge de départ contenant 4 % à 15 % de zircon, en pourcentage massique sur la base de la masse de la charge de départ sèche, la particule frittée présentant :

   - la composition chimique suivante, en pourcentages en masse :

   $85\ \% \leq Al_2O_3$, $Al_2O_3$ constituant le complément à 100 % ;
   $3\ \% \leq ZrO_2 + HfO_2 \leq 13\ \%$, avec $HfO_2 \leq 1\ \%$ ;
   $1\ \% \leq SiO_2 \leq 6\ \%$ ;
   $0,3\ \% \leq CaO \leq 2\ \%$ ;
   moins de 5 % d'autres constituants, et

   - les phases cristallisées suivantes, en pourcentages en masse sur la base de la quantité totale de phases cristallisées :

   $86\ \% \leq$ corindon; le corindon constituant le complément à 100 % ;
   $3\ \% \leq$ zircone + hafnie, éventuellement stabilisés $: \leq 14\ \%$ ;
   mullite $\leq 6\ \%$ ;
   moins de 5 % d'autres phases cristallisées, et

   - une porosité totale inférieure ou égale à 5 %.

13. Particule frittée selon la revendication précédente, dans laquelle la charge de départ contient 5 % à 15 % de zircon, en pourcentage massique sur la base de la masse de la charge de départ sèche, et/ou la teneur en $Al_2O_3$ est supérieure à 87 % et/ou inférieure à 91 %, en pourcentages en masse, et la teneur en $ZrO_2 + HfO_2$ est supérieure à 5 % et/ou inférieure à 10 %, en pourcentages en masse, et/ou la teneur en $SiO_2$ est inférieure à 4 %, en pourcentages en masse, et/ou la teneur en CaO est supérieure à 0,5 % et/ou inférieure à 1,8 %, en pourcentages en masse.

14. Particule frittée selon l'une quelconque des deux revendications immédiatement précédentes, présentant une teneur en corindon supérieure à 88 % et/ou inférieure à 94 %, en pourcentage en masse sur la base de la quantité totale de phases cristallisées, et/ou présentant une teneur en zircone + hafnie, éventuellement stabilisés, supérieure à 4 % et/ou inférieure à 12 %, en pourcentage en masse sur la base de la quantité totale de phases cristallisées, et/ou présentant une teneur en mullite inférieure à 4%, en pourcentage en masse sur la base de la quantité totale de phases cristallisées.

15. Poudre comprenant plus de 90% en pourcentages en masse, de particules selon l'une quelconque des revendications précédentes.

16. Procédé de fabrication de particules frittées selon l'une quelconque des revendications 1 à 14, comprenant les étapes successives suivantes :

   a) si nécessaire, broyage d'une ou de plusieurs poudres de matières premières, de préférence par cobroyage, de manière que leur mélange, à l'étape c), conduise à un mélange particulaire présentant une taille médiane inférieure à 0,6 $\mu$m,
   b) optionnellement, séchage dudit mélange particulaire,
   c) préparation d'une charge de départ à partir dudit mélange particulaire, optionnellement séché, la composition de la charge de départ étant adaptée de manière à obtenir, à l'issue de l'étape g), des particules frittées présentant une composition conforme à celle d'une particule frittée selon l'une quelconque des revendications précédentes, ladite charge de départ comportant de 4% à 25% de particules de zircon, en pourcentage massique sur la base de la masse de la charge de départ sèche,
   d) mise en forme de la charge de départ sous la forme de particules crues,
   e) optionnellement, lavage,

f) optionnellement, séchage,

g) frittage à une température de frittage supérieure à 1450°C et inférieure à 1600°C.

**17.** Dispositif choisi parmi une suspension, un broyeur, un appareil de traitement de surfaces et un échangeur thermique, ledit dispositif comportant une poudre de particules selon la revendication 15.


**Patentansprüche**

**1.** Gesintertes Teilchen, hergestellt aus einer Ausgangscharge, die 4% bis 25% Zirkon in Massenprozenten auf der Basis der Masse der trockenen Ausgangscharge enthält, wobei das gesinterte Teilchen präsentiert:

- die folgende chemische Zusammensetzung in Massenprozenten:

$70\% \leq Al_2O_3$, wobei $Al_2O_3$ das Komplement zu 100% bildet;
$3\% \leq ZrO_2+HfO_2 \leq 18\%$, mit $HfO_2 \leq 1\%$;
$1\% \leq SiO_2 \leq 10\%$;
$0,3\% \leq CaO \leq 2\%$, mit $CaO \geq 0,6\%$, wenn $Al_2O_3 \leq 79\%$;
weniger als 5% anderer Bestandteile, und

- die folgenden Kristallisationsphasen in Massenprozent auf der Basis der Gesamtmasse der Kristallisationsphasen:

$65\% \leq$ Korund; wobei das Korund das Komplement zu 100% bildet;
$3\% \leq$ Zirkonoxid + Hafniumoxid, eventuell stabilisiert $\leq 21\%$;
Mullit $\leq 16\%$;
weniger als 5% anderer Kristallisationsphasen, und

- eine Gesamtporosität kleiner oder gleich 5%.

**2.** Gesintertes Teilchen nach dem vorhergehenden Anspruch, welches mehr als 0,1% $Y_2O_3$ und/oder mehr als 0,1% $CeO_2$ enthält.

**3.** Gesintertes Teilchen nach einem der vorhergehenden Ansprüche, in welchem der Gehalt an "anderen Bestandteilen" anderer als $Y_2O_3$ und $CeO_2$ kleiner als 3,0% ist.

**4.** Gesintertes Teilchen nach einem der vorhergehenden Ansprüche, in welchem die Oxide mehr als 95% der Gesamtmasse des Teilchens bilden.

**5.** Gesintertes Teilchen nach einem der vorhergehenden Ansprüche, in welchem ein Teil des Mullits beim Sintern geschaffen ist.

**6.** Gesintertes Teilchen nach einem der vorhergehenden Ansprüche, welches einen Gehalt an "anderen Kristallisationsphasen" kleiner als 4% in Massenprozent auf der Basis der gesamten Masse der Kristallisationsphasen aufweist und/oder eine Massenquantität von amorpher Phase in Massenprozent im Verhältnis zur Masse des Teilchens kleiner als 20% aufweist.

**7.** Gesintertes Teilchen nach einem der vorhergehenden Ansprüche, welches eine Gesamtporosität kleiner als 4,5% und/oder eine Dichte größer als 3,6 g/cm$^3$ und kleiner als 4,20 g/cm$^3$ aufweist.

**8.** Gesintertes Teilchen nach einem der vorhergehenden Ansprüche, welches eine Größe kleiner als 10 mm und größer als 0,005 mm aufweist und/oder eine Sphärizität, das heißt ein Verhältnis zwischen seinem kleinsten Durchmesser und seinem größten Durchmesser, größer als 0,7.

**9.** Gesintertes Teilchen nach einem der vorhergehenden Ansprüche, welches aus einer Ausgangscharge hergestellt ist, die 15% bis 25% Zirkon enthält und zwar in Massenprozenten auf der Basis der Masse der trockenen Ausgangscharge, wobei das gesinterte Teilchen aufweist:

- die folgende chemische Zusammensetzung in Massenprozenten:

$70\% \leq Al_2O_3$, wobei $Al_2O_3$ das Komplement zu 100% bildet;
$13\% \leq ZrO_2+HfO_2 \leq 18\%$, mit $HfO_2 \leq 1\%$;
$5\% \leq SiO_2 \leq 9\%$;
$0,6\% \leq CaO \leq 2\%$,
weniger als 5% andere Bestandteile, und

- die folgenden Kristallisationsphasen in Massenprozent auf der Basis der Gesamtmenge der Kristallisationsphasen:

$65\% \leq$ Korund; wobei das Korund das Komplement zu 100% bildet,
$10\% \leq$ Zirkonoxid + Hafniumoxid, eventuell stabilisiert:
$\leq 21\%$;
$4\% \leq$ Mullit $\leq 16\%$;
weniger als 5% anderer Kristallisationsphasen, und

- eine Gesamtporosität kleiner oder gleich 5%.

**10.** Gesintertes Teilchen nach dem vorhergehenden Anspruch, in welchem die Ausgangscharge 20% bis 25% Zirkon in Massenprozent auf der Basis der Masse der trockenen Ausgangscharge enthält und/oder der Gehalt an $Al_2O_3$ größer als 72% ist und/oder kleiner als 78% in Massenprozent, und/oder der Gehalt an $ZrO_2+HfO_2$ größer als 15% und/oder kleiner als 17% in Massenprozenten ist, und/oder der Gehalt an $SiO_2$ größer als 6% und/oder kleiner als 8,5% in Massenprozenten ist, und/oder der Gehalt an CaO größer als 0,7% und/oder kleiner als 1,8% in Massenprozenten ist.

**11.** Gesintertes Teilchen nach einem der beiden vorhergehenden Ansprüche, welches einen Korund -Gehalt von mehr als 68% und/oder kleiner als 82% in Massenprozent auf der Basis der Gesamtmenge der Kristallisationsphasen aufweist und/oder einen Gehalt an Zirkonoxid + Hafniumoxid, eventuell stabilisiert, größer als 11% und/oder kleiner als 19% in Massenprozent auf der Basis der Gesamtmenge der Kristallisationsphasen, und/oder einen Gehalt an Mullit größer als 5% und/oder kleiner als 14% in Massenprozent auf der Basis der Gesamtmenge der Kristallisationsphasen.

**12.** Gesintertes Teilchen nach einem der Ansprüche 1 bis 8, welches aus einer Ausgangscharge hergestellt ist, die 4% bis 15% Zirkon enthält in Massenprozenten auf der Basis der Masse der trockenen Ausgangscharge, wobei das gesinterte Teilchen aufweist:

- die folgende chemische Zusammensetzung in Massenprozenten:

$85\% \leq Al_2O_3$, wobei $Al_2O_3$ das Komplement zu 100% bildet;
$3\% \leq ZrO_2+HfO_2 \leq 13\%$, mit $HfO_2 \leq 1\%$;
$1\% \leq SiO_2 \leq 6\%$;
$0,3\% \leq CaO \leq 2\%$,
weniger als 5% anderer Bestandteile, und

- die folgenden Kristallisationsphasen in Massenprozent auf der Basis der Gesamtmenge der Kristallisationsphasen:

$86\% \leq$ Korund; wobei das Korund das Komplement zu 100% bildet;
$3\% \leq$ Zirkonoxid + Hafniumoxid, eventuell stabilisiert: $\leq 14\%$;
Mullit $\leq 6\%$;
weniger als 5% anderer Kristallisationsphasen, und

- eine Gesamtporosität kleiner oder gleich 5%.

**13.** Gesintertes Teilchen nach dem vorhergehenden Anspruch, in welchem die Ausgangscharge 5% bis 15% Zirkon enthält in Massenprozent auf der Basis der Masse der trockenen Ausgangscharge, und/oder der Gehalt an $Al_2O_3$ größer als 87% und/oder kleiner als 91% in Massenprozenten ist, und der Gehalt an $ZrO_2+HfO_2$ größer als 5%

und/oder kleiner als 10% in Massenprozenten ist, und/oder der Gehalt an $SiO_2$ kleiner als 4% in Massenprozent ist, und/oder der Gehalt an CaO größer als 0,5% und/oder kleiner als 1,8% in Massenprozent ist.

14. Gesintertes Teilchen nach einem der beiden vorhergehenden Ansprüche, welches einen Gehalt an Korund größer als 88% und/oder kleiner als 94% in Massenprozent auf der Basis der Gesamtmenge der Kristallisationsphasen aufweist, und/oder einen Gehalt an Zirkonoxid + Hafniumoxid, eventuell stabilisiert, größer als 4% und/oder kleiner als 12% in Massenprozent auf der Basis der Gesamtmenge der Kristallisationsphasen, und/oder einen Gehalt an Mullit kleiner als 4% in Massenprozent auf der Basis der Gesamtmenge der Kristallisationsphasen.

15. Pulver, welches mehr als 90% in Massenprozent von Teilchen gemäß einem der vorhergehenden Ansprüche aufweist.

16. Herstellungsverfahren für gesinterte Teilchen nach einem der Ansprüche 1 bis 14, welches die folgenden aufeinanderfolgenden Schritte aufweist:

a) wenn nötig, Mahlen von einem oder mehreren Pulvern aus ersten Materialien, vorzugsweise durch Ko-Vermahlung, derart, dass ihre Mischung im Schritt c) zu einer Teilchenmischung führt, die eine mittlere Größe kleiner als 0,6μm aufweist,
b) optional Trocknung der Teilchenmischung,
c) Zubereitung einer Ausgangscharge aus dieser Teilchenmischung, optional getrocknet, wobei die Zusammensetzung der Ausgangscharge derart angepasst ist, am Ende des Schrittes g) gesinterte Teilchen zu erhalten, die eine Zusammensetzung aufweisen, die mit der eines gesinterten Teilchens nach einem der vorhergehenden Ansprüche konform ist, wobei die Ausgangscharge 4% bis 25% Zirkonteilchen in Massenprozent auf der Basis der Masse der trockenen Ausgangscharge enthält,
d) Formen der Ausgangscharge in Form von harten Teilchen,
e) optional waschen,
f) optional trocknen,
g) Sintern bei einer Sintertemperatur größer als 1450°C und kleiner als 1600°C.

17. Vorrichtung ausgewählt unter einer Suspension, einer Mühle, einem Apparat zur Oberflächenbehandlung und einem Wärmetauscher, wobei die Vorrichtung ein Pulver der Teilchen nach dem Anspruch 15 aufweist.

**Claims**

1. Sintered particle produced from a feedstock containing 4% to 25% zircon in weight percentage relative to the weight of the dry feedstock, said sintered particle having:

- the following chemical composition, in weight percentage:

70% ≤ $Al_2O_3$, $Al_2O_3$ forming the remainder up to 100%;
3% ≤ $ZrO_2$+$HfO_2$ ≤ 18%, with $HfO_2$ ≤ 1%;
1% ≤ $SiO_2$ ≤ 10%;
0.3% ≤ CaO ≤ 2%, with CaO ≤ 0.6% if $Al_2O_3$, ≤ 79%;
less than 5% other constituents; and

- the following crystallised phases, in weight percentage relative to the total quantity of the crystallised phases:

65% ≤ corundum; corundum constituting the remainder up to 100%;
3% ≤ zirconia + hafnia, optionally stabilised ≤ 21%;
mullite ≤ 16%;
less than 5% of other crystallised phases; and

- a total porosity less than or equal to 5%.

2. Sintered particle according to any of the preceding claims, comprising more than 0.1% $Y_2O_3$ and/or more than 0.1 % $CeO_2$.

3. Sintered particle according to any of the preceding claims, wherein the content of "other constituents" other than $Y_2O_3$ and $CeO_2$ is less than 3.0%.

4. Sintered particle according to any of the preceding claims, wherein oxides represent more than 95% of the total mass of said particle.

5. Sintered particle according to any of the preceding claims, wherein part of the mullite is created during sintering.

6. Sintered particle according to any of the preceding claims, with a content of "other crystallised phases" less than 4% in weight percentage relative to the total quantity of crystallised phases, and/or having a mass quantity of amorphous phase, in weight percentage relative to the weight of the particle, less than 20%.

7. Sintered particle according to any of the preceding claims, with a total porosity less than 4.5% and/or with a density greater than 3.6 g/cm$^3$ and less than 4.20 g/cm$^3$.

8. Sintered particle according to any of the preceding claims, with a size less than 10 mm and greater than 0.005 mm, and /or a sphericity, i.e. a ratio between its smallest diameter and its greatest diameter, greater than 0.7.

9. Sintered particle according to any of the preceding claims, produced from a feedstock containing 15% to 25% zircon in weight percentage relative to the weight of the dry feedstock, said sintered particle having:

   - the following chemical composition, in weight percentage:

      $70\% \leq Al_2O_3$, $Al_2O_3$ forming the remainder up to 100%;
      $13\% \leq ZrO_2+HfO_2 \leq 18\%$, with $HfO_2 \leq 1\%$;
      $5\% \leq SiO_2 \leq 9\%$;
      $0.6\% \leq CaO \leq 2\%$;
      less than 5% other constituents; and

   - the following crystallised phases, in weight percentage relative to the total quantity of the crystallised phases:

      $65\% \leq$ corundum; corundum constituting the remainder up to 100%;
      $10\% \leq$ zirconia + hafnia, optionally stabilised $\leq 21\%$;
      $4\% \leq$ mullite $\leq 16\%$;
      less than 5% of other crystallised phases; and

   - a total porosity less than or equal to 5%.

10. Sintered particle according to the preceding claim, wherein the feedstock contains 20% to 25% zircon in weight percentage relative to the weight of the dry feedstock and/or the content of $Al_2O_3$ is greater than 72% and/or less than 78% in weight percentage, and/or the content of $ZrO_2+HfO_2$ is greater than 15% and/or less than 17% in weight percentage, and/or the content of $SiO_2$ is greater than 6% and/or less than 8.5% in weight percentage, and/or the content of CaO is greater than 0.7% and/or less than 1.8% in weight percentage.

11. Sintered particle according to any of the two directly preceding claims with a corundum content greater than 68% and/or less than 82% in weight percentage relative to the total quantity of crystallised phases, and/or with a content of zirconia + hafnia, optionally stabilised, greater than 11% and/or less than 19% in weight percentage relative to the total quantity of crystallised phases, and/or with a mullite content greater than 5% and/or less than 14% in weight percentage relative to the total quantity of crystallised phases.

12. Sintered particle according to any of claims 1 to 8, produced from a feedstock containing 4% to 15% zircon in weight percentage relative to the weight of the dry feedstock, said sintered particle having:

   - the following chemical composition, in weight percentage:

      $85\% \leq Al_2O_3$, $Al_2O_3$ forming the remainder up to 100%;
      $3\% \leq ZrO_2+HfO_2 \leq 13\%$, with $HfO_2 \leq 1\%$;
      $1\% \leq SiO_2 \leq 6\%$;

$0.3\% \leq CaO \leq 2\%$;
less than 5% other constituents; and

- the following crystallised phases, in weight percentage relative to the total quantity of the crystallised phases:

$86\% \leq$ corundum; corundum constituting the remainder up to 100%;
$3\% \leq$ zirconia + hafnia, optionally stabilised $\leq 14\%$;
mullite $\leq 6\%$;
less than 5% of other crystallised phases; and

- a total porosity less than or equal to 5%.

13. Sintered particle according to the preceding claim, wherein the feedstock contains 5% to 15% zircon in weight percentage relative to the weight of the dry feedstock, and/or the content of $Al_2O_3$ is greater than 87% and/or less than 91% in weight percentage, and/or the content of $ZrO_2+HfO_2$ is greater than 5% and/or less than 10% in weight percentage, and/or the content of $SiO_2$ is less than 4% in weight percentage, and/or the content of CaO is greater than 0.5% and/or less than 1.8% in weight percentage.

14. Sintered particle according to any of the two directly preceding claims with a corundum content greater than 88% and/or less than 94% in weight percentage relative to the total quantity of crystallised phases, and/or with a content of zirconia + hafnia, optionally stabilised, greater than 4% and/or less than 12% in weight percentage relative to the total quantity of crystallised phases, and/or with a mullite content less than 4% in weight percentage relative to the total quantity of crystallised phases.

15. Powder comprising more than 90% in weight percentage particles according to any of the preceding claims.

16. Method for production of sintered particles according to any of claims 1 to 14, comprising the following successive steps:

a) if necessary, grinding of one or more powders of raw materials, preferably by co-grinding such that their mixture at step c) leads to a particulate mixture with a median size less than 0.6 $\mu$m,
b) optionally, drying of said particulate mixture,
c) preparation of a feedstock from said particulate mixture, optionally dried, the composition of the feedstock being adapted so as to obtain, on completion of step g), sintered particles having a composition in accordance with that of the sintered particle according to any of the preceding claims, said feedstock comprising 4% to 25% zirconia particles in weight percentage relative to the weight of the dry feedstock,
d) forming of the feedstock in the form of green particles,
e) optionally washing,
f) optionally drying,
g) sintering at a sintering temperature above 1450 °C and less than 1600 °C.

17. Device is selected from a suspension, a grinder, a surface treatment device and heat exchanger, said device comprising a particulate powder according to claim 15.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005075375 A
- US 5466400 A
- FR 2842438
- US 4063856 A
- US 20090036291 A

**Littérature non-brevet citée dans la description**

- **BALZAR et al.** *American Mineralogist,* Décembre 1993, vol. 78 (11-12), 1192-1196